# FASCICULE DE BREVET EUROPEEN

(11) **EP 1 390 563 B1**
(45) Date de publication et mention de la délivrance du brevet: **07.01.2009**
(21) Numéro de dépôt: 02735540.3
(22) Date de dépôt: 15.05.2002
(51) Int. Cl.: C23C 18/12, C03C 17/00

(54) **SUBSTRAT A REVETEMENT PHOTOCATALYTIQUE**
SUBSTRAT MIT PHOTOKATALYTISCHER BESCHICHTUNG
SUBSTRATE WITH PHOTOCATALYTIC COATING

(30) Priorité: 16.05.2001 FR 0106432
(43) Date de publication de la demande: 25.02.2004
(73) Titulaire: SAINT-GOBAIN GLASS FRANCE, 92400 Courbevoie (FR)
(72) Inventeur: GUENEAU, Lethicia, F-94300 Vincennes (FR); RONDET, Mauricette, F-94400 Vitry sur Seine (FR); GARREC, Ronan, F-60200 Compiègne (FR); PETIT, Jean-Pierre, F-38120 Saint-Egrève (FR); DENOYELLE, Alain, F-38100 Grenoble (FR); WOUTERS, Yves, F-38320 Poisat (FR)
(74) Mandataire: Teyssedre, Laurent
(86) Numéro de dépôt international: PCT/FR2002/001629
(87) Numéro de publication internationale: WO 2002/092879

(56) Documents cités:
- EP-A- 1 066 878
- EP-A- 1 081 108
- WO-A-99/44954
- FR-A- 2 738 836

## Description

La présente invention concerne des substrats munis d'un revêtement photocatalytique, le procédé d'obtention d'un tel revêtement et ses différentes applications.

Elle concerne plus particulièrement les revêtements comprenant des matériaux semi-conducteurs à base d'oxydes métalliques, notamment d'oxyde de titane, qui sont aptes, sous l'effet d'un rayonnement de longueur d'onde adéquate, à initier des réactions radicalaires provoquant l'oxydation de produits organiques.

Les revêtements permettent ainsi de conférer de nouvelles fonctionnalités aux matériaux qu'ils recouvrent, notamment des propriétés anti-salissures, fongicides, bactéricides, éventuellement combinées à des propriétés hydrophiles, anti-buée, optiques, ...

Des substrats très divers peuvent être envisagés, notamment ceux utilisés dans le domaine des véhicules ou des bâtiments, tels que des vitrages, des matériaux de façade, de bardage, de toiture, de sol, tels que des tuiles, des ardoises, des dalles, des carrelages et plus généralement tout matériau utilisé dans la construction. Ces matériaux peuvent être ainsi en verre, métal, en vitrocéramique, en céramique, en ciment, en briques, en bois, en pierre ou matériau reconstitué à partir de ces matériaux naturels, en matériau plastique, en matériau fibreux du type laine minérale, notamment pour des procédés de filtration, etc, ...

On peut les ranger également en matériaux transparents, utilisés en particulier comme vitrages, tels que des substrats verriers ou en plastique souple ou rigide comme des substrats en polyester ou en acrylate comme le polyméthacrylate de méthyle (PMMA). Les substrats peuvent aussi être rangés dans la catégorie des non ou peu poreux (verre) ou dans la catégorie des matériaux (relativement) poreux tels que des tuiles, les céramiques.

On peut considérer les substrats « mono-matériaux » comme les substrats verriers, ou les substrats comportant une superposition de matériaux, de couches, comme les façades que l'on munit d'un revêtement du type enduit de façade.

Il est déjà connu des demandes de brevet internationales WO97/10186 et WO97/10185 des revêtements contenant du TiO₂ cristallisé anatase à propriétés photocatalytiques, revêtements obtenus à partir de la décomposition thermique de précurseurs organo-métalliques appropriés et/ou à partir de particules de TiO₂ « pré-cristallisées » et enrobées dans un liant minéral ou organique.

Il est également connu des brevets WO99/44954 et FR-A-2738836 une amélioration de ces types de revêtements consistant à utiliser des particules de T1O₂ pré-cristallisées que l'on enrobe dans un liant qui, lui aussi, contient du TiO₂ partiellement cristallisé : le liant vient ainsi participer à l'effet photocatalytique des particules, augmentant les performances du revêtement à la fois en termes de propriétés photocatalytiques et de durabilité.

Il est par ailleurs connu des demandes de brevet EP-1 036 826 et EP-1 081 108 des revêtements utilisant des particules de TiO₂ dans un liant contenant de l'oxyde de zirconium.

L'invention a alors pour but d'améliorer les revêtements photocatalytiques connus, notamment en termes de niveau de performances photocatalytiques, de pérennité de ses performances dans le temps et/ou de durabilité mécanique/chimique.

La présente invention a tout d'abord pour objet un substrat muni sur au moins une partie d'au moins une de ses faces d'un revêtement photocatalytique contenant de l'oxyde de titane photocatalytique (de préférence essentiellement ou majoritairement sous forme anatase), qui se trouve dans un liant essentiellement minéral comprenant au moins un oxyde métallique semi-conducteur choisi parmi ceux listés dans la revendication 1.

On choisit de préférence un oxyde semi-conducteur qui ne présente substantiellement pas, sous illumination solaire, d'activité photocatalytique (ou alors dont l'activité photocatalytique est nettement inférieure à celle du TiO₂), et de conductivité électronique significative. Sa résistivité est choisie avantageusement inférieure ou égale à 10⁸ ohm.cm, notamment inférieure ou égale à 10⁷ ou 10⁶ ohm.cm. La résistivité peut même être choisie beaucoup plus faible, par exemple être inférieure à 10 ohm.cm. (Par extension, cette résistivité peut être celle du liant dans son ensemble, s'il contient plusieurs oxydes semi-conducteurs et éventuellement d'autres composés qui ne le sont pas.)

En fait, comme cela sera détaillé par la suite, il s'est avéré que des oxydes semi-conducteurs, présentant donc un certain niveau de conductivité électronique, permettaient, sous forme de liant en association avec du TiO₂ photocatalytique, d'augmenter l'efficacité du processus de photocatalyse, en comparaison avec un liant qui serait isolant électriquement, par exemple un liant à base de SiO₂. De manière surprenante, utiliser un tel liant « conducteur » selon l'invention, permet d'augmenter le niveau photocatalytique du revêtement dans son ensemble, et également d'augmenter la durabilité de cette fonctionnalité.

Cette demande se démarque donc de l'enseignement du brevet WO99/44954. Il ne s'agit pas, dans la présente invention, de rendre le revêtement plus photocatalytique en utilisant un liant qui est partiellement cristallisé et photocatalytique lui-même. Ici, il ne s'agit pas d'additionner l'activité photocatalytique importante de particules de TiO₂ cristallisées, et celle, plus faible, provenant du liant. Dans l'invention, on ne cherche avant tout à exploiter que les propriétés de conductivité électronique du liant, qui, par ailleurs, peut être tout à fait amorphe, tout à fait dépourvu d'activité photocatalytique per se.

L'invention a ainsi découvert un effet coopératif, une synergie entre le matériau photocatalytique et le matériau avec lequel il est intimement associé : son liant.

Selon une première variante de l'invention, au moins une partie de l'oxyde de titane photocatalytique (notamment tout ou la majorité) est incorporée au revêtement sous forme de particules préformées. On choisit de préférence des particules de taille nanométrique. Ces particules sont généralement sous forme d'agglomérats de cristallites, les agglomérats ayant une taille moyenne d'environ 5 à 80 nm (par exemple 30 à 60 nm) et les cristallites une taille moyenne d'environ 5 à 20 nm (notamment 5 à 10 nm). On les manipule généralement sous forme d'une dispersion dans une phase liquide, notamment en suspension colloïdale en milieu aqueux ou en dispersion dans un ou plusieurs solvants organiques. Ces tailles moyennes correspondent à des diamètres, en assimilant par approximation leurs formes à des sphères (même si ce n'est pas nécessairement le cas, les particules pouvant avoir aussi une forme lenticulaire ou en forme de bâtonnet). En première approximation, on peut considérer que l'on retrouve dans le revêtement final les mêmes agglomérats, n'ayant subi que peu de modification structurelle ou dimensionnelle. En fait, on a observé que lorsque le procédé de fabrication du revêtement implique un traitement thermique, il est accompagné généralement d'une augmentation sensible de la taille des cristallites, par exemple d'un facteur 1,5 à 2,5, comme cela est détaillé dans le brevet WO99/44954 précité.

Selon une seconde variante, au moins une partie de l'oxyde de titane photocatalytique est constituée lors de la formation du revêtement, notamment par décomposition thermique de précurseurs de type organo-métallique ou halogènures métalliques ou sels métalliques. Comme cela est expliqué dans le brevet WO97/10186 précité, des techniques de dépôt du revêtement (détaillées par la suite) du type sol-gel ou pyrolyse de précurseurs adhoc permettent de former in situ des « particules » de TiO₂ photocatalytique (soit dès le dépôt à chaud, soit par cristallisation par un traitement thermique post-dépôt). Dans ce cas là, on a aussi des domaines cristallins de TiO₂ (anatase) répartis dans le liant, que l'on peut assimiler aux particules formées au préalable décrites dans la première variante, sachant que peuvent aussi être présents des domaines amorphes de TiO₂.

Les deux variantes sont alternatives ou cumulatives.

Pour amplifier l'impact du liant « conducteur » selon l'invention (on comprendra sous ce terme, dans le reste du texte, la présence dans le liant d'un ou plusieurs oxydes métalliques semi-conducteurs), on peut augmenter sa conductivité électronique en dopant avec un métal ou un halogène le ou les oxydes semi-conducteurs du liant. Ce dopage, notamment avec un halogène, peut être réalisé en utilisant une technique de dépôt par décomposition thermique de précurseurs halogénés (qui sont également les précurseurs de l'un des oxydes du revêtement ou qui est un précurseur dont la seule fonction est d'apporter l'halogène), technique mentionnée plus haut. Pour faciliter l'incorporation de l'halogène dans le revêtement, notamment quand on part de précurseurs du type halogénures métalliques, on peut réaliser sur le revêtement, pendant ou après son dépôt, un traitement thermique sous atmosphère sous-stoechiométrique en oxygène

En fait, il faut comprendre le terme « dopage » au sens large, en ce sens que le dopant est intégré dans le revêtement, sans être nécessairement localisé uniquement dans le liant ou sur un des composés constituant le liant.

Les inventeurs se sont intéressés à la raison pour laquelle on obtenait un niveau photocatalytique, à iso-quantité de TiO₂ photocatalytique, plus élevé avec un liant conducteur. En fait, sous l'effet d'un rayonnement adéquat, centré sur les ultraviolets, des paires électron-trou sont générées dans les particules de TiO₂ photocatalytique : les trous initient des réactions radicalaires provoquant l'oxydation de substances organiques, les électrons devant réaliser une réduction électrochimique . La présence d'un liant conducteur permettrait deux choses :
➢ d'une part, il pourrait accueillir les photo-électrons générés dans le TiO₂ photocatalytique, et permettre à ces électrons d'y réaliser une réduction électrochimique, en principe celle de l'oxygène. On a ainsi une coopération entre les particules photocatalytiques et leur liant, les particules photocatalytiques étant le siège de réactions d'oxydation par les photo-trous, tandis que le liant est le siège de réactions de réduction par les photo-électrons qui y ont été transférés. Il y aurait donc optimisation du cycle rédox impliqué par le phénomène de photocatalyse, en permettant aux électrons d'être efficacement utilisés,
➢ d'autre part, cette « évacuation » d'électrons défavorise la recombinaison spontanée des paires d'électrons-trous générés par les particules, ce qui là encore va dans le sens d'une plus grande efficacité des particules.

Deux cas de figure peuvent se présenter, de façon non limitative:
➢ dans un premier cas de figure, le ou au moins un des oxyde(s) métallique(s) semi-conducteur(s) du liant a le niveau énergétique le plus bas de sa bande de conduction qui est :
   ① - inférieur ou égal au niveau énergétique le plus bas de la bande de conduction de l'oxyde de titane photocatalytique,
   ② - proche du niveau énergétique électronique (le plus probable) de l'oxygène, E⁰ₒₓ, dans le couple rédox O₂/H₂O₂ ou O₂/H₂O.
   ① - le positionnement relatif des bandes de conduction du liant et de l'oxyde photocatalytique est important : s'il faut que le liant conducteur ait un niveau suffisant de conduction électronique pour acheminer les électrons en surface du liant, il faut aussi que la bande de conduction du liant soit proche, de préférence plus basse, en énergie que celle du TiO₂ photocatalytique, de façon à ce que les électrons puissent passer d'un matériau à l'autre,
   ② - quant au niveau énergétique E⁰ₒₓ des couples rédox O₂/H₂O₂ ou O₂/H₂O, s'il est similaire à celui de la bande de conduction du liant conducteur, la double réaction de réduction (sur le liant) et d'oxydation (sur le TiO₂) va être favorisée, les électrons vont pouvoir réaliser la réduction électrochimique voulue.

Un certain nombre d'oxydes respectent ces deux conditions ① et ②.

Il s'agit notamment de l'oxyde de titane TiO₂, de l'oxyde d'étain SnO₂, de l'oxyde d'antimoine (notamment Sb₂O₃ et/ou Sb₂O₅), de l'oxyde de zinc ZnO, de l'oxyde de tungstène WO₃, de l'oxyde de cobalt Co₃O₄, de l'oxyde de nickel NiO, d'un oxyde mixte de cobalt et de nickel NiCo₂O₄. Chacun de ces oxydes peut aussi être dopé (comme ZnO:Al, SnO₂:Sb, SnO₂:F, ZrO₂:F, Sb₂O₃:F, ZnO:F). Il peut s'agir aussi d'oxydes mixtes contenant du manganèse (la famille des manganites) et d'oxydes mixtes contenant du cobalt (la famille des cobaltites).

Il s'est avéré que les oxydes pré-cités contenant Co, Ni ou Mn ont un intérêt supplémentaire: ce sont des composés qui sont catalytiques vis-à vis de la réduction de l'oxygène. La réaction redox mentionnée plus haut s'en trouve encore favorisée. La littérature a étudié les propiétés catalytiques des oxydes mixtes de Ni et de Co, notamment la publication "Surfaces properties of Ni and Co mixed oxides : a study by X rays, XPS, BET and PZC", de L.A De Faria, JF Koenig, P Chartier et S Trasatti (Electrochemica Acta 44(1998)1481-1489). Des publications décrivent des modes d'obtention par sol-gel d'oxydes de Ni et/ou de Co, comme celle de F. Svegl et al. dans Electrochemica Acta 45(2000) 4359-4371, celle de G. Spinolo et al. dans Journal of Electroanalytical Chemistry 423 (1997) 49-57, et celle de J.G. Kim et al. dans Applied Surface Science 165(2000) 70-84.

Un mode de réalisation avantageux de l'invention consiste donc à ce que le liant "conducteur" soit non seulement conducteur électronique, mais aussi catalytique vis-à-vis de la réduction de l'oxygène (pour au moins un des oxydes semi-conducteurs qu'il contient s'il en contient plusieurs).

Dans un second cas de figure, le ou au moins un des oxyde(s) métallique(s) semi-conducteur(s) du liant a :
① - le niveau énergétique le plus bas de sa bande de conduction qui est supérieur à celui de l'oxyde de titane photocatalytique,
② - des états électroniques dans la bande interdite, notamment liés à des défauts structuraux et/ou des liaisons pendantes. Il s'agit notamment de l'oxyde d'aluminium Al₂O₃ et de l'oxyde de zirconium ZrO₂ (éventuellement dopés). Malgré le positionnement défavorable de leurs bandes de conduction, ce type d'oxyde s'est révélé avantageux, car ils ont ainsi des états énergétiques intermédiaires situés dans leur bande interdite qui leur permettent d'accueillir des électrons (et de se rapprocher des niveaux E⁰ₒₓ des couples O₂/H₂O₂ ou O₂/H₂O).

Selon une variante de l'invention, le liant selon l'invention peut en outre comporter au moins un composé isolant électriquement, notamment un dérivé de silicium, comme de l'oxyde de silicium, de l'oxynitrure, de l'oxycarbure ou du nitrure de silicium.

On comprend par « isolant » des matériaux qui ont notamment une résistivité supérieure à 10¹⁰ ohm.cm, notamment supérieure à 10¹² ohm.cm.

Une conséquence extrêmement avantageuse de l'invention est que l'on peut moduler beaucoup plus librement le taux de TiO₂ photocatalytique dans le revêtement : des taux même relativement peu élevés permettent quand même d'obtenir des niveaux photocatalytiques satisfaisants grâce à l'effet amplificateur du liant conducteur. Notamment dans la variante où l'on utilise des particules de TiO₂ photocatalytiques préformées, cela peut être d'un intérêt considérable, car un fort taux de particules préformées dans le revêtement tend généralement à en abaisser la durabilité et/ou l'adhérence au substrat sur le quel le revêtement est déposé : l'invention permet ainsi d'obtenir de meilleurs compromis performances /durabilité, plus particulièrement dans cette variante.

On peut ainsi choisir, par exemple, un rapport R_{TiO2/liant} en poids entre l'oxyde de titane photocatalytique et le liant qui varie entre 10/90 et 60/40, notamment 10/90 et 50/50 ou 20/80 et 40/60.

En ce qui concerne la composition du liant, on préfère que le taux d'oxyde(s) métallique(s) semi-conducteur(s) dans celui-ci soit d'au moins 25% en poids, notamment d'au moins 50 jusqu'à 100% en poids. Il peut être intéressant, comme on l'a vu plus haut, d'ajouter un matériau non-conducteur comme le SiO₂, notamment pour des considérations d'ordre optique : ainsi, la présence de SiO₂ peut abaisser l'indice de réfraction global du revêtement, ce qui permet d'abaisser si besoin est sa réflexion lumineuse.

Avantageusement, la quantité d'oxyde de titane présente dans le revêtement est comprise entre 5 et 100 µg/cm², notamment entre 10 et 50 ou entre 15 et 35 µg/cm². Ici, il s'agit de l'ensemble de l'oxyde de titane, comprenant à la fois le TiO₂ cristallisé photocatalytique et éventuellement aussi du TiO₂ photocatalytique (amorphe) s'il y en a dans le liant.

Les revêtements selon l'invention présentent notamment une activité photocatalytique du revêtement, rapporté à la quantité totale d'oxyde de titane, d'au moins 2 nm/h/(µg/cm²), notamment d'au moins 5, 10 ou 20 nm/h/(µg/cm²). Le fait de rapporter cette activité à la quantité totale de TiO₂ permet de mieux évaluer l'impact du liant sur ses performances, comme les exemples le démontreront ultérieurement.

Les revêtements selon l'invention, tout particulièrement quand ils sont destinés à recouvrir des verres ou substrats transparents pour faire des vitrages, restent de préférence d'épaisseur interférentielle (au plus 1 µm, généralement de l'ordre de 10 à 300 nm).

Une variante selon l'invention consiste à associer le revêtement à au moins une autre couche d'épaisseur interférentielle. Il peut notamment s'agir d'une couche à propriétés thermiques (bas-émissive), à fonction optique (pour abaisser le niveau de réflexion lumineuse ou en modifier la couleur par effet interférentiel) ou faisant barrière à la migration d'espèces diffusant hors du substrat : on insère alors la couche entre le substrat et le revêtement. C'est particulièrement utile quand le substrat est en verre, pour bloquer la diffusion d'alcalins. La sous-couche barrière peut être en dérivé de silicium comme de l'oxyde de silicium, de l'oxycarbure ou de l'oxynitrure ou du nitrure de silicium ou à base d'oxyde métallique éventuellement dopé (SnO₂:F, SiO₂:Sb, ...). Le revêtement peut ainsi constituer la dernière couche d'un empilement réfléchissant la chaleur/bas-émissif, par exemple.

Les applications du substrat revêtu selon l'invention ont déjà été évoquées dans le préambule de la demande. Il peut en fait s'agir de tout matériau architectural, notamment un vitrage, un matériau de toiture, un matériau de bardage, de sol, de faux-plafond. Il peut aussi s'agir de matériaux utilisés dans les moyens de locomotion (automobile, train, avion, bateau) notamment des vitrages ou de matériaux destinés à l'électroménager (parois de four, parois vitrées de réfrigérateur/congélateur, ...).

Les substrats utilisables sont donc très variés : matériau transparent type verre ou polymère, céramique, vitrocéramique, bois, métal, ciment, pierre, enduit de face, matériau reconstitué à partir de matériaux naturels, ....

On peut aussi déposer le revêtement sur des matériaux fibreux du type laine minérale d'isolation thermique et/ou acoustique ou encore tout assemblage de fil de renforcement, pour des applications dans le domaine de la filtration par exemple.

Les revêtements selon l'invention étant également hydrophiles, on peut exploiter suivant les applications leurs fonction anti-salissures et/ou bactéricide/fongicide et/ou anti-buée, selon les besoins.

L'invention a également pour objet le procédé d'obtention du substrat revêtu précédemment décrit. On peut utiliser, dans une première variante, une technique impliquant une décomposition thermique d'au moins un précurseur organo-métallique ou sous forme d'un halogénure métallique ou de sel métallique. La phase de dépôt à proprement dite peut être suivie ou non d'un traitement thermique post-dépôt, par exemple de l'ordre de 30 minutes à plusieurs heures vers 350-550°C (dépôt à froid du type sol gel ou dépôt à chaud du type pyrolyse).

Dans une seconde variante, on peut utiliser une technique de dépôt sous vide, notamment la pulvérisation cathodique, de préférence assistée par champ magnétique. Elle peut être réactive (à partir de cible de métal/métaux, alliages, avec un dépôt en présence d'espèces oxydantes au moins), ou non-réactive (à partir de cibles de céramique de composition appropriée).

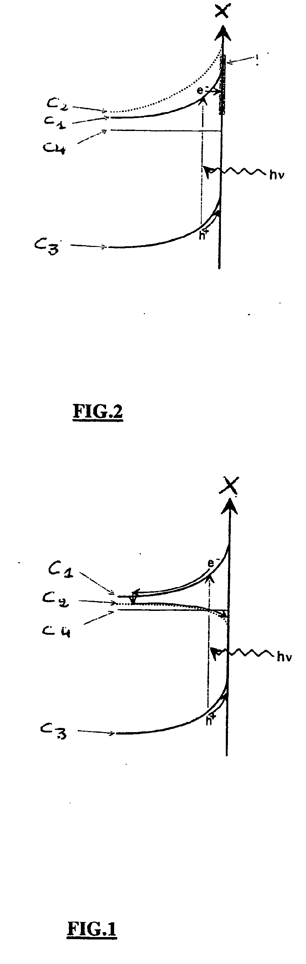

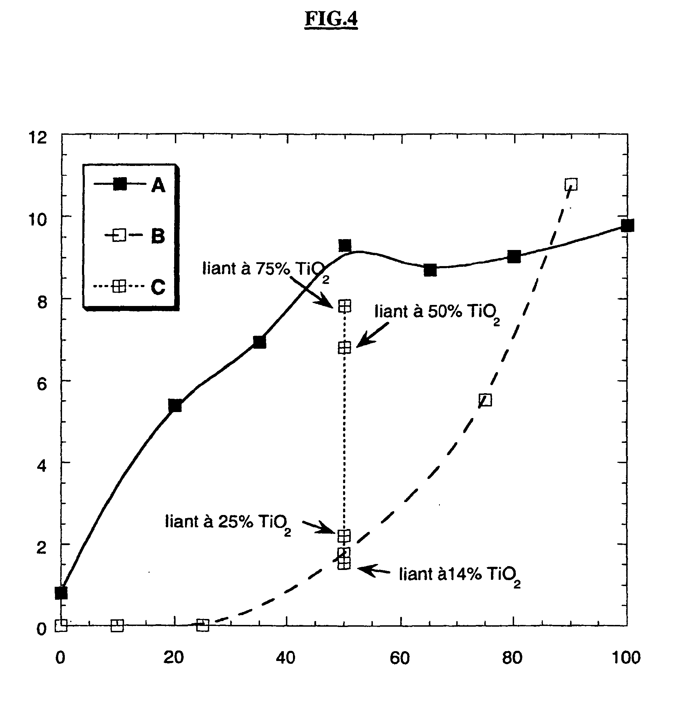

L'invention sera décrite ci-dessous plus en détails à l'aide d'exemples non limitatifs et des figures suivantes :
√ figures 1 à 3 : des détails sur les mécanismes probables faisant intervenir le liant conducteur de l'invention dans le niveau d'activité photocatalytique du revêtement,
√ figure 4 : un graphe représentant l'activité photocatalytique de revêtements selon l'invention.

La figure 1 permet d'illustrer le premier cas de figure mentionné plus haut, à savoir quand le liant conducteur comporte un oxyde semi-conducteur dont le niveau le plus bas de sa bande de conduction est en dessous de celui du TiO₂ photocatalytique. L'axe X représente le niveau énergétique électronique (eV) croissant, la ligne en traits pleins C₁ correspond au niveau le plus bas de la bande de conduction du TiO₂ photocatalytique et la ligne en traits pointillés C₂ correspond à celui, par exemple du SnO₂, Sb₂O₃ ou ZnO (liant), la ligne C₃ correspond au niveau d'énergie le plus bas de la bande de valence du TiO₂ photocatalytique. L'axe X est la limite entre l'épaisseur du revêtement (à gauche) et sa surface tournée vers l'extérieur (à droite). La ligne horizontale C₄ représente le niveau de Fermi.

Par photo-excitation, des électrons, symbolisés e⁻, vont donc passer de la bande de conduction du TiO₂ à celle, par exemple, du SnO₂ plus basse en énergie. L'électron tend ensuite à être acheminé à la surface du revêtement.

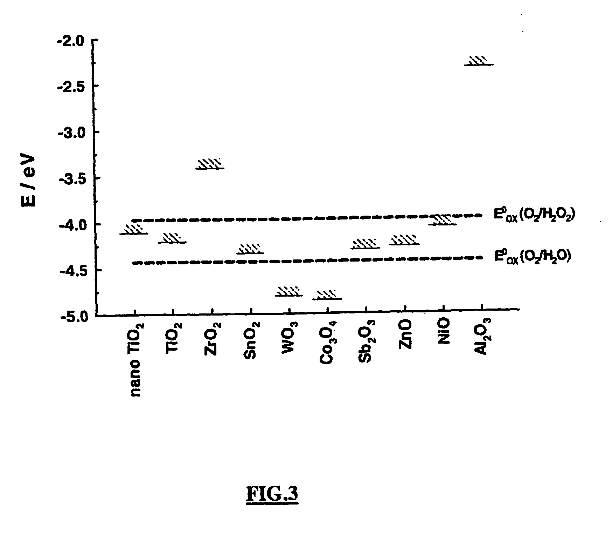

La figure 3 représente, sur une échelle en ordonnée, l'énergie (à pH = 7, en eV) du bas de la bande de conduction de différents oxydes, ainsi que les niveaux E⁰ₒₓ de l'oxygène dans les couples en O₂/H₂O₂ et O₂/H₂O (E⁰ₒₓ est le niveau le plus probable, au centre d'une gaussienne de largeur voisine de 0.8 eV). On peut vérifier que SnO₂, par exemple, qui se trouve entre les deux niveaux des couples O₂/H₂O₂ et/ou O₂/H₂O, est bien placé pour opérer une réduction électrochimique de l'oxygène en H₂O₂ ou H₂O avec les électrons qu'il a récupérés des particules photocatalytiques. Les oxydes TiO₂, Sb₂O₃, ZnO, NiO sont également appropriés ; WO₃ et Co₃O₄ sont un peu bas mais peuvent encore convenir, puisqu'ils diffèrent de moins de 0,5 eV, notamment moins de 0,4 eV, du potentiel rédox du couple O₂/H₂O, et Co₃O₄ est un oxyde connu pour être catalytique vis à vis de la réduction de l'oxygène.

Le second cas de figure mentionné plus haut est illustré par la figure 2 : dans ce cas, avec les mêmes conventions que pour la figure 1, la bande de conduction du liant conducteur, par exemple en ZrO₂ ou en Al₂O₃ est au-dessus de celle du TiO₂ photocatalytique. Leurs positions dans la figure 3 ne paraissent pas, théoriquement, favorables. En fait, ces deux oxydes permettent également d'accueillir les électrons provenant du matériau photocatalytique, car ils possèdent des états énergétiques intermédiaires dans leurs bandes interdites (symbolisés à la figure 2 par une zone hachurée le long de l'axe X.

Tous les exemples ci-dessous bien que illustratif de l'effet technique lié à l'invention se rapportent tous à l'exception des exemples D-16,D-17,D-18 et D-20- à des substrats differents de l'invention telle que définie par les revendications ci-jointes.

### EXEMPLES 1 à 5

Ces cinq exemples se rapportent à un substrat en verre clair silico-sodo-calcique de 3 mm, surmonté d'une première couche en SiOC déposée de façon connue par CVD (pyrolyse en phase gazeuse (Chemical Vapor Deposition), puis d'un revêtement photocatalytique constitué d'un liant mixte SiO₂ + TiO₂ enrobant des particules de TiO₂ préformées.

Le dépôt se fait par sol-gel, par dip-coating, comme décrit dans le brevet pré-cité WO99/44954, à partir d'une solution ① contenant les précurseurs du liant et utilisant :
⇒ comme solvant: de l'éthanol et de l'éthylène glycol en proportions massiques 75/25
⇒ comme stabilisant : de l'acétylacétonate,
⇒ comme précurseur de TiO₂ : du tétrabutoxyde de titane (TBT)
⇒ comme précurseur de SiO₂ : du tétraéthylorthosilicate (TEOS) et d'une dispersion ②, qui est :
⇒ la phase liquide en éthylène glycol contenant les particules cristallisées photocatalytiques, de caractéristiques suivantes :
   ↪ surface spécifique des particules : ≥ 350 m²/g
   ↪ taille des particules : ≈ 40 nm
   ↪ taille des cristallites qui constituent les particules : 7 nm
   ↪ phase cristalline : anatase à plus de 80%

On associe ensuite la solution ① et la dispersion ② dans des concentrations/proportions ad hoc pour avoir dans le revêtement les taux de TiO₂ et de SiO₂ et de nano-particules voulus dans le liant.

L'activité photocatalytique du revêtement est mesurée de la façon suivante, en utilisant de l'acide palmitique : Une couche d'acide palmitique est déposée par pulvérisation à partir d'une solution dans le chloroforme sur la plaque à tester. La quantité déposée est ensuite déterminée par pesée. La plaque est ensuite placée sous irradiation UV (environ 30 W/m²) et le flou induit par la présence de l'acide palmitique est mesuré au cours du temps. Ceci permet de déterminer la vitesse de disparition de l'acide palmitique, exprimée en nm/h. Cette vitesse peut également être ramenée à la quantité totale de TiO₂ (en µg/cm²) présent sur le vitrage étudié (représentative de l'épaisseur de la couche) et s'exprime alors en (nm/h)/(µg/cm²).

Les revêtements selon les cinq exemples contiennent tous 50% en poids de nano-particules de TiO₂ préformées, et 50% en poids en liant réparti entre SiO₂ et TiO₂. Ils ont été recuits après dépôt vers 500°C.

Le tableau 1 ci-dessous regroupe pour chacun des exemples les données suivantes (l'exemple 1 a un liant 100% SiO₂ et est donc un exemple comparatif) :
➢ le taux de TiO₂ par rapport à SiO₂ dans le liant, en % molaire : « % TiO₂ liant »,
➢ le niveau d'activité photocatalytique des revêtements « AP », selon le test décrit plus, exprimé en nm/h/(µg/cm²), rapporté à la quantité totale de TiO₂ dans le revêtement.

**Tableau 1**

| EXEMPLE | % TiO₂ LIANT | AP |
|---|---|---|
| 1 (comparatif) | 0 ( 100% SiO₂) | 1.1 |
| 2 | 14 | 1.5 |
| 3 | 25 | 2.2 |
| 4 | 50 | 6.8 |
| 5 | 75 | 7.8 |

### EXEMPLE 6

Cet exemple concerne un revêtement déposé sur le même substrat et par une technique dite de « dip-coating » contenant 50% en poids de nano-particules de TiO₂ préformées (celles utilisées dans les exemples précédents) et 50% d'un liant à base de 100% d'oxyde de zirconium.

Le mode opératoire est le suivant : on ajoute de l'isopropoxyde de zirconium dans de l'isopropanol. On y ajoute de l'acétylacétone, et on effectue une dilution avec de l'éthanol. On mélange ensuite cette solution à une dispersion de nano-particules en suspension colloïdale dans de l'eau acidifié avec de l'acide nitrique. Après dépôt, le revêtement est recuit vers 500°C, l'activité photocatalytique AP du revêtement ainsi obtenu est, selon la convention utilisée pour les exemples précédents, de 2,5 nm/h/(µg/cm²).

### EXEMPLES 7 et 8

Ces exemples concernent des revêtements ne contenant (en poids) que 10% de nano-particules préformées.

L'exemple 7 est l'exemple comparatif, comprenant un liant 100% SiO₂, le dépôt se fait par dip-coating.

L'exemple 8 utilise un liant 100% SnO₂ dopé à l'antimoine.

Pour l'exemple 7, on utilise une suspension colloïdale de nano-particules de TiO₂ comme à l'exemple 6 et une solution à base de TEOS.

Pour l'exemple 8, le mode opératoire est le suivant : on dissout du chlorure d'étain II (SnCl₂) dans du diméthyl formamide. On dissout ensuite du chlorure d'antimoine dans du diméthyl formamide, et on ajoute cette seconde solution à la première. On ajoute ensuite une suspension colloïdale de nano-particules de TiO₂ comme précédemment, dont la concentration a été ajustée. Le revêtement est déposé par dip-coating. Il est ensuite recuit vers 500°C.

Pour l'exemple 7, l'activité photocatalytique AP mesurée est de 0,1 nm/h/(µg/cm²).

Pour l'exemple 8, l'activité photocatalytique AP mesurée est de 3 nm/h/(µg/cm²).

De cette série d'exemples 1 à 8, on voit qu'à iso-quantité de TiO₂, le liant influe directement sur l'activité photocatalytique du revêtement alors qu'il n'est pas (ou quasiment) pas photocatalytique lui-même.

Cela est notamment frappant pour l'exemple 8, qui contient très peu de nano-particules de TiO₂ photocatalytique.

On prouve ainsi l'importance des propriétés semi-conductrices et de conduction électronique du liant.

Pour mémoire, on rappelle ci-dessous les résistivités électriques d'oxydes conducteurs pouvant être utilisés dans la cadre de l'invention, en comparaison avec celles du verre et du SiO₂ :

| | |
|---|---|
| ZnO:Al | 10⁻³ |
| SnO₂:Sb | 10⁻² |
| SnO₂ | 5 |
| ZrO₂ | 10⁷ |
| TiO₂ | 10⁵ |
| Verre | 10¹² |
| SiO₂ | 10¹⁷ |

Trois séries d'exemples A, B, C ont ensuite été faites, en utilisant un liant mixte TiO₂ + SiO₂ et des nano-particules de TiO₂, de façon similaire à la série d'exemples 1 à 5 (même mode de dépôt, mêmes précurseurs).

Le tableau 2 ci-dessous résume, pour chaque exemple de chaque série, (les pourcentages sont en poids)
➢ Le % de TiO₂ nano-particulaire
➢ Le % TiO₂ du liant
➢ Le % SiO₂ du liant

- La valeur d'activité photocatalytique du revêtement dans son ensemble AP', exprimée en nm/h, la valeur d'activité photocatalytique du revêtement rapporté à la quantité totale de TiO₂ dans le revêtement AP exprimée en nm/h/(µg/cm²),et la quantité Q de TiO₂ (contenue dans les nano-particules et le liant) dans le revêtement exprimée en µg/cm².

**Tableau 2**

| % TiO₂ nano-particulaire | % TiO₂ dans le liant | % SiO₂ dans le liant | AP' nm.h⁻¹ | Q = quantité de TiO₂ (nanoparticules + liant) / µg.cm⁻² | AP nm.h⁻¹.µg⁻¹.cm² |
|---|---|---|---|---|---|
| | | | | | |
| Série A | | | | | |
| 0 | 100 | 0 | 18 | 22.3 | 0.81 |
| 20 | 100 | 0 | 128 | 23.7 | 5.40 |
| 35 | 100 | 0 | 159 | 22.9 | 6.94 |
| 50 | 100 | 0 | 231 | 24.8 | 9.30 |
| 65 | 100 | 0 | 210 | 24.1 | 8.71 |
| 80 | 100 | 0 | 167 | 18.5 | 9.03 |
| 100 | 100 | 0 | 222 | 22.7 | 9.78 |
| | | | | | |
| Série B | | | | | |
| 0 | 14 | 86 | 0 | 1 | 0 |
| 10 | 14 | 86 | 0 | 8.3 | 0 |
| 25 | 14 | 86 | 0 | 17.6 | 0 |
| 50 | 14 | 86 | 58 | 32.7 | 1.77 |
| 75 | 14 | 86 | 233 | 42.1 | 5.53 |
| 90 | 14 | 86 | 535 | 49.7 | 10.77 |
| | | | | | |
| Série C | | | | | |
| 50 | 14 | 86 | 15 | 9.7 | 1.55 |
| 50 | 25 | 75 | 25 | 11.3 | 2.21 |
| 50 | 50 | 50 | 88 | 12.9 | 6.82 |
| 50 | 75 | 25 | 137 | 17.5 | 7.83 |

La figure 4 représente sous forme d'un graphe l'activité photocatalytique de ces revêtements : en abscisse est représenté le pourcentage en poids de nano-particules dans le revêtement, et en ordonnée la valeur AP : elle met tout à fait en évidence que plus il y a de TiO₂ dans le liant, plus l'activité photocatalytique augmente (série C). La comparaison de la série B et de la série C montre bien que la quantité de matériau conducteur électronique dans le liant a un impact aussi significatif sur le niveau d'activité photocatalytique du revêtement que la quantité de nano-particules du TiO₂.

### EXEMPLES SELON UNE SERIE D

Une dernière série d'exemples concerne la variante où le TiO₂ photocatalytique est généré in situ par décomposition thermique de précurseurs adhoc et cristallisé au moins partiellement (ce qui peut nécessiter une opération de recuit post-dépôt).

Ces exemples utilisent différents types de liant à part le TiO₂. Le TiO₂ provenant de la décomposition thermique de précurseurs est en partie cristallisé anatase (photocatalytique) et en partie amorphe. Les dépôts se font par pyrolyse liquide sur un substrat en verre déjà utilisé pour les exemples précédents.

Le tableau 3 ci-dessous regroupe pour chacun des exemples de cette série :
➢ Le type de liant (la formule Sb₂Oₓ signifie qu'il s'agit soit de Sb₂O₃ soit de Sb₂O₅, la stoechiométrie en oxygène n'ayant pas été mesurée)
➢ La quantité de TiO₂ dans les revêtements (mesurée par fluorescence X : exprimée en µg/cm² : Q_{TiO2}
➢ La valeur AP telle que précédemment définie, en nm/h/(µg/cm²)
➢ La quantité de matière totale du revêtement, exprimée également en µg/cm² : Q_{TOT}

Pour tous ces exemples, la proportion entre le TiO₂ (qu'il soit cristallisé ou amorphe) et les autres composants du revêtement (le liant) est de 90% en mole de TiO₂ pour 10% en mole de Si ou d'un autre métal suivant les exemples.

**Tableau 3**

| EXEMPLES | Q_{TIO2} | Q_{TOT} | LIANT | AP |
|---|---|---|---|---|
| D-10 | 15.4 | 15.4 | TiO₂ | 19.4 |
| D-11 | 12.1 | 14.6 | SnO₂ | 11.5 |
| D-12 | 12.4 | 15.0 | SnO₂:F | 12.5 |
| D-13 | 11.1 | 12.7 | Al₂O₃ | 4.8 |
| D-14 | 11.8 | 13.5 | Al₂O₃:F | 4.7 |
| D-15 | 15.8 | 18.5 | ZrO₂ | 17.8 |
| D-16 | 16.0 | 18.7 | ZrO₂:F | 20.0 |
| D-17 | 19.5 | 25.0 | Sb₂Oₓ | 3.0 |
| D-18 | 17.0 | 21.8 | Sb₂Oₓ:F | 1.5 |
| D-19 | 19.6 | 21.8 | ZnO | 1.8 |
| D-20 | 20.3 | 22.6 | ZnO:F | 2.2 |

Les précurseurs pour chacun de ces exemples sont des précurseurs de type organo-métallique, halogénure ou sel métallique, connus de la littérature. Pour l'exemple D-10 constitué entièrement de TiO₂, il s'agit du même précurseur que dans les exemples 1 à 5.

Le tableau 4 ci-dessous mentionne pour ces exemples les valeurs de transmission lumineuse T_{L} mesurées selon l'Illuminant D₆₅ des verres ainsi revêtus, ainsi que les valeurs de réflexion lumineuse R_{L} (même Illuminant). Il indique aussi la valeur de transmission diffuse T_{d} en % également, et la valeur de Delta T_{d}, qui correspond à la variation de transmission diffuse des revêtements après avoir subi le test d'abrasion mécanique suivant : on fait subir au revêtement un test de frottement à sec consistant en un mouvement de va-et-vient combiné à une rotation propre d'un cylindre chargé. La charge de cylindre est de 390 g/cm², la vitesse de va-et-vient est de 50 allers/retours par minute, et la vitesse de rotation propre est de 6 tours par minute. La valeur de Td est mesurée après 500 cycles de va-et-vient.

**Tableau 4**

| EXEMPLES | Tl | Rl | T_{d} | Delta T_{d} |
|---|---|---|---|---|
| D-10 | 83.3 | 16.2 | 0.5 | 0.6 |
| D-11 | 86.7 | 13.1 | 0.2 | 0.9 |
| D-12 | 86.3 | 13.4 | 0.3 | 0.5 |
| D-13 | 87.3 | 12.5 | 0.2 | 3.5 |
| D-14 | 86.3 | 13.5 | 0.2 | 2.6 |
| D-15 | 81.2 | 18.5 | 0.3 | 1.2 |
| D-16 | 80.9 | 18.8 | 0.3 | 0.6 |
| D-17 | 81.9 | 17.6 | 0.5 | 0.3 |
| D-18 | 83.2 | 15.1 | 1.7 | 1.2 |
| D-19 | 81.9 | 17.4 | 0.7 | 0.4 |
| D-20 | 81.3 | 18.3 | 0.4 | 1.3 |

Ces résultats confirment les précédents : les liants « conducteurs » permettent d'améliorer dans de larges proportions les performances des revêtements photocatalytiques, en obtenant en outre des revêtements résistants à l'abrasion et de bonne qualité optique.

En conclusion, l'ensemble de ces résultats montre que l'on peut sélectionner au mieux les liants conducteurs selon l'invention, qui permettent d'évacuer des particules/domaines cristallins photocatalytiques les électrons photo-générés, et d'opérer dans le revêtement des réactions rédox avantageuses.

## Revendications

1. Substrat muni sur au moins une partie d'au moins une de ses faces d'un revêtement à propriétés photocatalytiques contenant de l'oxyde de titane photocatalytique, notamment cristallisé sous forme anatase, dans un liant essentiellement minéral comprenant au moins un oxyde métallique semi-conducteur choisi parmi l'oxyde d'antimoine (notamment Sb₂O₃ et/ou Sb₂O₅), l'oxyde de cobalt Co₃O₄, l'oxyde de nickel NiO, l'oxyde mixte de cobalt et de nickel NiCo₂O4, ZrO₂:F, Sb₂O₃:F, ZnO:F, les oxydes mixtes contenant du manganèse ou du cobalt, comme les manganites ou les cobaltites.

2. Substrat selon la revendication 1, ***caractérisé en ce qu'au*** moins une partie de l'oxyde de titane photocatalytique est incorporée au revêtement sous forme de particules pré-formées, notamment de taille nanométrique.

3. Substrat selon l'une des revendications précédentes, ***caractérisé en ce qu'au*** moins une partie de l'oxyde de titane photocatalytique est constituée lors de la formation du revêtement, notamment par décomposition thermique de précurseurs.

4. Substrat selon l'une des revendications précédentes, ***caractérisé en ce que*** le ou au moins un des oxyde(s) métallique(s) semi-conducteur(s) du liant a une résistivité électrique inférieure ou égale à 10⁸ ohm.cm.

5. Substrat selon l'une des revendications précédentes, **caractérisé en ce que** le ou au moins un des oxyde(s) métallique(s) semi-conducteur(s) du liant est catalytique vis-à-vis de la réduction de l'oxygène.

6. Substrat selon l'une des revendications précédentes, ***caractérisé en ce que*** le ou au moins un des oxydes(s) métallique(s) semi-conducteur(s) du liant est dopé, notamment par un métal ou un halogène.

7. Substrat selon l'une des revendications précédentes, ***caractérisé en ce que*** le ou au moins un des (oxyde(s) métallique(s) semi-conducteur(s) du liant:
➢ a le niveau énergétique le plus bas de sa bande de conduction qui est inférieur ou égal au niveau énergétique le plus bas de la bande de conduction de l'oxyde de titane photocatalytique,
➢ est proche du niveau énergétique électronique le plus probable de l'oxygène dans le couple rédox O₂/H₂O₂ et/ou O₂/H₂O.

8. Substrat selon l'une des revendications précédentes, ***caractérisé en ce que*** le liant comprend aussi un composé isolant électriquement, notamment un dérivé de silicium comme l'oxyde de silicium, l'oxynitrure, l'oxycarbure ou le nitrure de silicium.

9. Substrat selon l'une des revendications précédentes, ***caractérisé en ce que*** le taux d'oxyde(s) métallique(s) semi-conducteur(s) dans le liant est d'au moins 25% en poids, notamment d'au moins 50% jusqu'à 100% en poids.

10. Substrat selon l'une des revendications précédentes, ***caractérisé en ce que*** le rapport en poids entre l'oxyde de titane photocatalytique et le liant R_{TiO2/liant} varie entre 10/90 et 60/40, notamment entre 10/90 et 50/50.

11. Substrat selon l'une des revendications précédentes, ***caractérisé en ce que*** la quantité d'oxyde de titane présente dans le revêtement est de 5 à 100 µg/cm², notamment de 10 à 50 µg/cm².

12. Substrat selon l'une des revendications précédentes, ***caractérisé en ce que*** l'activité photocatalytique du revêtement est d'au moins 2 nm/h/(µg/cm²), notamment d'au moins 5 ou 10 ou 20 nm/h/(µg/cm²), rapporté à la quantité totale d'oxyde de titane dudit revêtement.

13. Substrat selon l'une des revendications précédentes, ***caractérisé en ce qu'****au* moins une couche mince à fonction optique, thermique en faisant barrière à la migration d'espèces diffusant du substrat est disposée entre ledit substrat et le revêtement à propriétés photocatalytiques.

14. Substrat selon l'une des revendications précédentes, ***caractérisé en ce qu'il*** s'agit d'un matériau architectural, notamment un vitrage, un matériau de toiture, de bardage, de sol, un faux-plafond, ou un matériau destiné à équiper des moyens de locomotion, notamment un vitrage pour automobile, train, avion, bateau, ou d'un matériau destiné à l'électroménager, notamment pour des parois de four ou des parois vitrées de réfrigérateur/congélateur.

15. Substrat selon l'une des revendications précédentes, ***caractérisé en ce qu'il*** est à base de matériau transparent du type verre ou polymère, ou à base de céramique ou à base de tuile ou de brique, ou à base de bois, métal, ciment, pierre, enduit, ou à base de matériau fibreux du type laine de verre d'isolation ou assemblage de fils de verre de renforcement.

16. Procédé d'obtention du substrat selon l'une des revendications précédentes, ***caractérisé en ce qu'on*** dépose le revêtement à propriétés photocatalytiques par une technique impliquant la décomposition thermique d'au moins un précurseur organe-métallique ou halogénure métallique, du type sol-gel, pyrolyse de poudre, pyrolyse liquide, pyrolyse en phase gazeuse.

17. Procédé selon la revendication 16 **caractérisé en ce que,** pour faciliter l'incorporation d'halogène dans le revêtement, quand il est obtenu à partir d'au moins un précurseur de type halogénure métallique, on réalise un traitement thermique dudit revêtement sous atmosphère sous-stoechiométrique en oxygène.

18. Procédé d'obtention du substrat selon l'une des revendications 1 à 15, ***caractérisé en ce qu'on*** dépose le revêtement à propriétés photocatalytiques par une technique de dépôt sous vide, notamment par pulvérisation cathodique.

## Claims

1. A substrate provided on at least part of at least one of its faces with a coating having photocatalytic properties, containing photocatalytic titanium oxide, especially crystallized in the anatase form, in an essentially mineral binder comprising at least one semiconducting metal oxide chosen from antimony oxide (especially Sb₂O₃ and/or Sb₂O₅), cobalt oxide Co₃O₄, nickel oxide NiO, a cobalt nickel mixed oxide NiCo₂O₄, F:ZrO₂, F:Sb₂O₃, F:ZnO, mixed oxides containing manganese or cobalt, such as manganites or cobaltites.

2. The substrate as claimed in claim 1, ***characterized in that*** at least part of the photocatalytic titanium oxide is incorporated into the coating in the form of preformed particles, especially of nanometric size.

3. The substrate as claimed in one of the preceding claims, ***characterized in that*** at least part of the photocatalytic titanium oxide is formed during formation of the coating, especially by thermal decomposition of precursors.

4. The substrate as claimed in one of the preceding claims, ***characterized in that*** the or at least one of the semiconducting metal oxides of the binder has an electrical resistivity of less than or equal to 10⁸ ohm.cm.

5. The substrate as claimed in one of the preceding claims, ***characterized in that*** the or at least one of the semiconducting metal oxides of the binder is catalytic with respect to the reduction of oxygen.

6. The substrate as claimed in one of the preceding claims, ***characterized in that*** the or at least one of the semiconducting metal oxides of the binder is doped, especially with a metal or a halogen.

7. The substrate as claimed in one of the preceding claims, ***characterized in that*** the or at least one of the semiconducting metal oxides of the binder:
➢ has the lowest energy level of its conduction band, which is less than or equal to the lowest energy level of the conduction band of the photocatalytic titanium oxide;
➢ is close to the most probable electron energy level of the oxygen in the O₂/H₂O₂ and/or O₂/H₂O redox couple.

8. The substrate as claimed in one of the preceding claims, ***characterized in that*** the binder also includes an electrically insulating compound, especially a silicon derivative such as silicon oxide, silicon oxynitride, silicon oxycarbide or silicon nitride.

9. The substrate as claimed in one of the preceding claims, ***characterized in that*** the content of semiconducting metal oxide(s) in the binder is at least 25% by weight, especially at least 50% and up to 100% by weight.

10. The substrate as claimed in one of the preceding claims, ***characterized in that*** the ratio by weight of the photocatalytic titanium oxide to the binder R_{TiO2/binder} varies between 10/90 and 60/40, especially between 10/90 and 50/50.

11. The substrate as claimed in one of the preceding claims, ***characterized in that*** the amount of titanium oxide present in the coating is from 5 to 100 µg/cm², especially from 10 to 50 µg/cm².

12. The substrate as claimed in one of the preceding claims, ***characterized in that*** the photocatalytic activity of the coating is at least 2 nm/h/(µg/cm²) especially at least 5 or 10 or 20 nm/h/(µg/cm²), relative to the total amount of titanium oxide of said coating.

13. The substrate as claimed in one of the preceding claims, ***characterized in that*** at least one thin layer having an optical function, thermal function by acting as a barrier to the migration of species diffusing from the substrate is deposited between said substrate and the coating having photocatalytic properties.

14. The substrate as claimed in one of the preceding claims, ***characterized in that*** it is an architectural material, especially glazing, a roofing, cladding, floor or false-ceiling material, or a material intended to equip means of locomotion, especially glazing for an automobile, train, airplane, or boat, or a material intended for domestic electrical appliances, especially for oven walls or glazed walls of a refrigerator/freezer.

15. The substrate as claimed in one of the preceding claims, ***characterized in that*** it is based on a transparent material of the glass or polymer type, or based on a ceramic or based on tile or brick or based on wood, metal, cement, stone or render or based on fibrous materials of the insulating glass wool type or an assembly of glass reinforcing yarns.

16. A process for obtaining the substrate as claimed in one of the preceding claims, ***characterized in that*** the coating having photocatalytic properties is deposited by a technique involving the thermal decomposition of at least one organometallic precursor or metal halide, of the sol-gel, powder pyrolysis, liquid pyrolysis or chemical vapor deposition type.

17. The process as claimed in claim 16 ***characterized in that,*** in order to facilitate the incorporation of halogen into the coating, when it is obtained from at least one precursor of the metal halide type, a heat treatment is carried out on said coating in an atmosphere which is substoichiometric in terms of oxygen.

18. The process for obtaining the substrate as claimed in one of claims 1 to 15 ***characterized in that*** the coating having photocatalytic properties is deposited by a vacuum deposition technique, especially by sputtering.

## Patentansprüche

1. Substrat, das auf wenigstens einem Teil mindestens einer Seite mit einer Beschichtung mit photokatalytischen Eigenschaften versehen ist, die speziell in Form von Anatas kristallisiertes photokatalytisches Titanoxid in einem im Wesentlichen anorganischen Bindemittel enthält, das mindestens ein halbleitendes Metalloxid umfasst, das aus Antimonoxid (insbesondere Sb₂O₃ und/oder Sb₂O₅), Cobaltoxid, Co₃O₄, Nickeloxid, NiO, Cobalt-Nickel-Mischoxid, NiCo₂O₄, ZrO₂:F, Sb₂O₃:F, ZnO:F, und den Mangan oder Cobalt enthaltenden Mischoxiden wie den Manganiten oder Cobaltiten ausgewählt ist.

2. Substrat nach Anspruch 1, **dadurch gekennzeichnet, dass** wenigstens ein Teil des photokatalytischen Titanoxids in Form vorgeformter Teilchen mit insbesondere Nanometergröße in die Beschichtung eingebaut ist.

3. Substrat nach einem der vorhergehenden Ansprüche, **dadurch gekennzeichnet, dass** wenigstens ein Teil des photokatalytischen Titanoxids während der Bildung der Beschichtung insbesondere durch thermische Zersetzung von Vorläufern gebildet wird.

4. Substrat nach einem der vorhergehenden Ansprüche, **dadurch gekennzeichnet, dass** der spezifische elektrische Widerstand des einen halbleitenden Metalloxids oder mindestens eines der halbleitenden Metalloxide des Bindemittels weniger als oder gleich 10⁸ Ohm·cm beträgt.

5. Substrat nach einem der vorhergehenden Ansprüche, **dadurch gekennzeichnet, dass** das eine halbleitende Metalloxid oder mindestens eines der halbleitenden Metalloxide des Bindemittels gegenüber der Sauerstoffreduktion katalytisch ist.

6. Substrat nach einem der vorhergehenden Ansprüche, **dadurch gekennzeichnet, dass** das eine halbleitende Metalloxid oder mindestens eines der halbleitenden Metalloxide des Bindemittels insbesondere mit einem Metall oder Halogen dotiert ist.

7. Substrat nach einem der vorhergehenden Ansprüche, **dadurch gekennzeichnet, dass** das eine halbleitende Metalloxid oder mindestens eines der halbleitenden Metalloxide des Bindemittels:
- das niedrigste Energieniveau seines Leitfähigkeitsbandes, das tiefer als das oder gleich dem niedrigsten Energieniveau des Leitfähigkeitsbandes des photokatalytischen Titanoxids ist, hat und
- sich nahe dem wahrscheinlichsten Elektronenenergieniveau des Sauerstoffs in dem Redoxpaar O₂/H₂O₂ und/oder O₂/H₂O befindet.

8. Substrat nach einem der vorhergehenden Ansprüche, **dadurch gekennzeichnet, dass** das Bindemittel auch eine elektrisch isolierende Verbindung, insbesondere eine Siliciumverbindung wie Siliciumoxid, -nitridoxid, -carbidoxid oder -nitrid, umfasst.

9. Substrat nach einem der vorhergehenden Ansprüche, **dadurch gekennzeichnet, dass** der Anteil des/der halbleitenden Metalloxide/s an dem Bindemittel mindestens 25 Gew.-% und insbesondere mindestens 50 bis 100 Gew.-% beträgt.

10. Substrat nach einem der vorhergehenden Ansprüche, **dadurch gekennzeichnet, dass** das Gewichtsverhältnis von photokatalytischem Titanoxid zu dem Bindemittel R_{TiO2/Bindemittel} zwischen 10/90 und 60/40 und insbesondere zwischen 10/90 und 50/50 variiert.

11. Substrat nach einem der vorhergehenden Ansprüche, **dadurch gekennzeichnet, dass** die Titanoxidmenge, die in der Beschichtung vorhanden ist, 5 bis 100 µg/cm² und insbesondere 10 bis 50 µg/cm² beträgt.

12. Substrat nach einem der vorhergehenden Ansprüche, **dadurch gekennzeichnet, dass** die photokatalytische Aktivität der Beschichtung mindestens 2 nm/h/(µg/cm²) und insbesondere mindestens 5 oder 10 oder 20 nm/h/(µg/cm²), bezogen auf die Gesamtmenge an Titanoxid dieser Beschichtung, beträgt.

13. Substrat nach einem der vorhergehenden Ansprüche, **dadurch gekennzeichnet, dass** mindestens eine dünne Schicht mit optischer, thermischer Funktion, indem sie als Barriere gegen die Migration von aus dem Substrat diffundierenden Spezies fungiert, zwischen diesem Substrat und der Beschichtung mit photokatalytischen Eigenschaften angeordnet ist.

14. Substrat nach einem der vorhergehenden Ansprüche, **dadurch gekennzeichnet, dass** es sich um ein architektonisches Material, insbesondere eine Verglasung, ein Dach-, Fassaden- und Bodenmaterial und eine Blinddecke, ein Material, mit welchem vorgesehen ist, Fortbewegungsmittel auszustatten, insbesondere eine Kraftfahrzeug-, Zug-, Flugzeug- und Schiffsverglasung, oder ein Material, das für Elektrohaushaltgeräte, insbesondere Ofenwände oder Glaswände von Kühlschränken/Tiefkühlschränken, vorgesehen ist, handelt.

15. Substrat nach einem der vorhergehenden Ansprüche, **dadurch gekennzeichnet, dass** es auf der Basis von transparentem Material vom Typ Glas bzw. Polymer, von keramischem Material, Dachziegel bzw. Ziegelstein, Holz, Metall, Zement, Stein bzw. Anstrich oder Fasermaterial vom Typ Dämmglaswolle bzw. verstärkendem Glasfaserverbund ist.

16. Verfahren zur Herstellung des Substrats nach einem der vorhergehenden Ansprüche, **dadurch gekennzeichnet, dass** die Beschichtung mit photokatalytischen Eigenschaften durch ein Verfahren aufgebracht wird, das die thermische Zersetzung vom Typ Sol-Gel, Pulver-, Flüssigkeits- und Gasphasenpyrolyse mindestens eines metallorganischen oder Metallhalogenidvorläufers einschließt.

17. Verfahren nach Anspruch 16, **dadurch gekennzeichnet, dass,** um den Halogeneinbau in die Beschichtung zu erleichtern, wenn diese aus mindestens einem Vorläufer vom Typ Metallhalogenid erhalten worden ist, eine Wärmebehandlung dieser Beschichtung unter einer an Sauerstoff unterstöchiometrischen Atmosphäre durchgeführt wird.

18. Verfahren zur Herstellung des Substrats nach einem der Ansprüche 1 bis 15, **dadurch gekennzeichnet, dass** die Beschichtung mit photokatalytischen Eigenschaften durch ein Vakuumabscheideverfahren, insbesondere Kathodenzerstäubung, aufgebracht wird.
